# EUROPEAN PATENT SPECIFICATION

(11) **EP 0 463 790 B1**
(45) Date of publication and mention of the grant of the patent: **20.09.1995**
(21) Application number: 91305534.9
(22) Date of filing: 19.06.1991
(51) Int. Cl.: H04N 5/06, H04N 5/073

(54) **Video synchronisation signal generation**
Videosynchronisierungssignalerzeugung
Génération de signal de synchronisation vidéo

(30) Priority: 29.06.1990 US 546385
(43) Date of publication of application: 02.01.1992
(73) Proprietor: SONY ELECTRONICS INC. (a Delaware corporation), Park Ridge, New Jersey 07656 (US)
(72) Inventor: Herz, William S., Newark, California 94560 (US)
(74) Representative: Cotter, Ivan John

(56) References cited:
- US-A- 4 169 659
- US-A- 4 562 457
- US-A- 4 931 872
- PATENT ABSTRACTS OF JAPAN, vol. 6, no. 81 (E-107), 19th May 1982;& JP-A-57 018 150
- COLLOQUE INTERNATIONAL SUR LA TELEVISION EN COULEUR, Paris, 25th - 29th March 1968, pages 1-8; E.H. NIELSEN: "Simplified pulse control of television equipment"

## Description

This invention relates to video synchronisation signal generation.

Modern video system typically require the use of numerous peripheral video subsystems which must all be synchronised with one another. Further, most sophisticated video system, such as video signal processors or work stations, require the use of a computer to control the various video peripherals or to perform some form of data processing. Therefore, a video synchronisation ("sync") signal source is required for supplying each of the peripheral video subsystems with a common video sync signal. Another requirement is a means by which the computer can interface with the various video peripherals so as to supply them with appropriate control signals and to receive from the video peripherals any data it requires.

Typically, a stand-alone video sync signal source, several of which are known in the art, is used to supply a common video sync signal such as a video black burst signal. Its output signal, i.e. the video sync signal, is coupled to each video peripheral. A drawback to the arrangement is that several video sync signal sources are required if video sync signals based upon several different video standards (e.g. NTSC, PAL, SECAM) are desired. Further, even if several such video sync signal sources are available, selecting the desired video sync signal from among the sources requires manual disconnection and reconnection of the various video peripherals to the desired video sync signal source. Alternatively, the computer could be used to control a switch to select from among the various video sync signal sources. However, this would require the use of yet another computer interface.

The interface between the computer and the various video peripherals is typically accomplished by way of a standard interface protocol, such as RS-422. With a serial RS-422 interface, each peripheral can communicate with the computer to indicate when the peripheral is in need of servicing, e.g. when it needs instructions or has data available for processing by the computer. However, transfer of instructions or data between the computer and peripherals must take place only during specific time periods within each video frame. This requires the use of some form of video frame pulse signal, synchronised to the common video sync signal, which can be used for determining the proper timing for transfer of instructions or data. Based upon this video frame pulse signal, an interrupt request signal must then be generated by each peripheral to send to the computer. Thus, each video peripheral must be provided with such a video frame pulse signal or, alternatively, have some decoding circuitry for decoding an appropriate frame pulse signal based upon the common video sync signal.

If a video frame pulse signal must be distributed along with the video sync signal, the aforementioned dilemma associated with multiple peripherals becomes worse, i.e. having to manually disconnect and reconnect multiple peripherals or provide a computer controlled video signal switch when several video sync signals (e.g. NTSC, PAL, SECAM) are used. Further, such decoding circuitry can be rather complex if video sync signals based upon several video standards are to be used within the video system.

Patent US-A-4 562 457 discloses a video processing unit which includes a video synchronisation circuit that generates a video synchronisation signal. The synchronisation circuit includes a sync stripper and burst separator that produces a frame pulse.

According to the present invention there is provided a self-contained, computer controllable, video synchronisation and frame pulse signal generator comprising:
a video synchronisation circuit operative to generate a first video synchronisation signal;
a first switch circuit coupled to receive both said first video synchronisation signal, and a second video synchronisation signal, and operative to provide a switched video synchronisation signal;
a video frame pulse circuit coupled to the video synchronisation circuit and operative to generate a video frame pulse signal indicating the presence of a first video signal frame;
a second switch circuit coupled to receive both said first video frame pulse signal, and a second video frame pulse signal indicating the presence of a second video signal frame, and operative selectively to provide at least one switched video frame pulse signal; and
a computer controllable gating circuit operative selectively to gate one of the switched video frame pulse signals.

In preferred embodiments of the invention described below, the video synchronisation signal generated by the video synchronisation ("sync") circuit is intended for use as a common video sync signal for a video system, and the video frame pulse is synchronised with the video sync signal. The video frame pulse signal can selectively be free-running or gated. The gating of the video frame pulse signal is computer controllable. This allows a computer within a video system to determine, in accordance with the video frame pulse signal, when to properly generate an interrupt request signal for prompting the transfer of instructions or data.

The signal generator of the present invention is preferably constructed as a self-contained unit to be included as a plug-in subsystem within a computer.

According to the preferred embodiments, one of several different video sync signals, and corresponding video frame pulse signals, can be selected. The selected video sync signal can be used as a common video sync signal within a video system, and the selected video frame pulse signal can be gated for generating an appropriate interrupt request signal. In more detail, a self-contained unit includes a computer controllable switching means which can programmably select a common video sync signal from among multiple video sync signals which are based upon different video standards, such unit having a common video sync signal source from which a common video frame pulse signal can be derived and used by the computer for determining the proper timing for transferring of instructions or data.

The invention will now be further described, by way of illustrative and non-limiting example, with reference to the accompanying drawings, in which corresponding elements are designated throughout by like reference numerals, and in which:
Figure 1 illustrates in simplified, functional block diagram form a computer controllable video synchronisation and frame pulse signal generator;
Figure 2 illustrates in simplified, functional block diagram form a video synchronisation generator that can be used within the signal generator;
Figure 3 illustrates in simplified, functional block diagram form a signal generator in accordance with a preferred embodiment of the invention; and
Figure 4 illustrates in simplified, functional block diagram form a signal generator in accordance with another preferred embodiment of the invention.

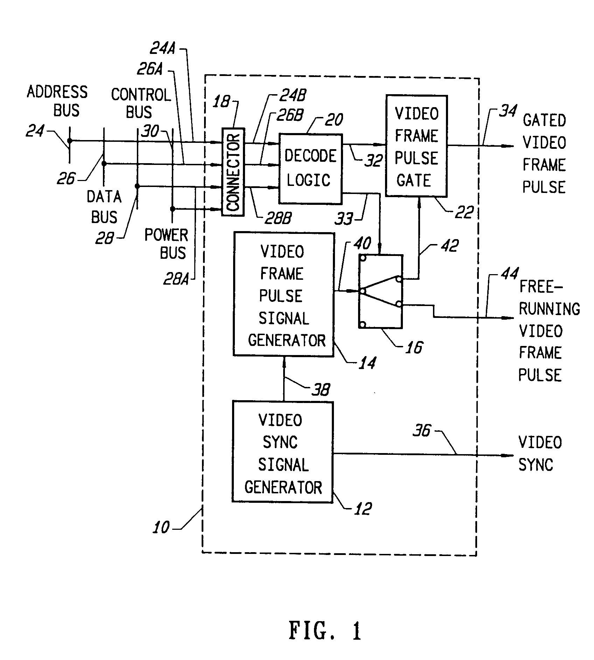

Figure 1 shows a computer controllable video synchronisation ("sync") and frame pulse signal generator 10. The signal generator 10 comprises a video sync signal generator 12, a video frame pulse signal generator 14, a signal switch 16, an electrical connector 18 with multiple conductors, a set of decoding logic 20, and a video frame pulse gate circuit 22. The foregoing functional circuit elements are coupled as shown in Figure 1 and mounted on a printed circuit board which is capable of being plugged in as an interface board in a personal computer having an open architecture, i.e. a personal computer in which the internal signal busses are accessible (e.g. PC-AT (trade mark), PC-compatible computers, etc.). When so installed in a computer, the connector 18 provides means by which the signal generator 10 is coupled to several busses within the computer, e.g. an address bus 24, a data bus 26, a control bus 28 and a power bus 30.

The power bus 30 within the computer provides DC power necessary for the signal generator 10. The address bus 24, data bus 26 and control bus 28 selectively provide an address signal 24A, a data signal 26A, and a control signal 28A, respectively. After the signals 24A, 26A, 28A are coupled through the connector 18, corresponding address 24B, data 26B and control 28B signals are coupled into the decoding logic 20 for generating a pulse gate control signal 32 and, optionally, a signal switch control signal 33. The pulse gate control signal 32 is used to control the video frame pulse gate circuit 22, as discussed below, to generate a gated video frame pulse signal 34. The optional signal switch control signal 33 is used to control the signal switch 16, as discussed below. (It should be appreciated that the control signals 32, 33 can be identical signals and share a common signal path.)

The video sync signal generator 12 generates a video sync signal 36 to be used as a master sync signal source within a video system, such as an off-line video editing system. Such a video sync signal 36 can consist of a video black burst signal or virtually any type of video sync signal deemed useful for a given video system (e.g. NTSC, PAL, PAL-M, SECAM or high definition video tri-level sync). The video sync signal generator 12 further provides a frame sync signal 38 for use by the video frame pulse signal generator 14. The video frame pulse signal generator 14 uses the frame sync signal 38 for generating an output signal 40, i.e. a video frame pulse signal, and synchronising it with the video sync signal 36.

The video frame pulse signal 40 is coupled into the signal switch 16. The signal switch 16 functionally comprises two independently operable signal pole, single throw switches, into the throws (or common throw, as shown in Figure 1) of which the video frame pulse signal 40 is coupled. The switched, i.e. selected, outputs at the poles of the switch 16 are then a video frame pulse signal 42 which is coupled into the video frame pulse gate circuit 22, a free-running video frame pulse signal 44, or both, or neither. In other words, the switch 16 is configured to allow the video frame pulse signal 40 to be coupled out as the signal 42 transferred to the video frame pulse gate 22 only, to be coupled out as the free-running video frame pulse signal 44 only, to be coupled out as both the signals 42, 44 simultaneously, or not to be coupled out at all.

It will be appreciated that the signal switch 16 can consist of virtually any form of electrical coupling or switching means. For example, the signal switch 16 can simply be a conductive jumper used selectively to couple to one or both of two possible signal paths. Alternatively, the signal switch 16 can be a solid state electronic switch or an electromechanical switch selectively controlled by the signal switch control signal 33.

If the output signal 40 of the video frame pulse signal generator 14 is coupled directly out by the switch 16 as the free-running video frame pulse signal 44, the frame pulse signal 44 is not gated and simply represents the presence of a video signal frame within the video sync signal 36. However, if the output signal 40 is coupled as the frame pulse signal input 42 to the video frame pulse gate circuit 22, it becomes the gated video frame pulse signal 34, dependent upon the decoded gate control signal 32. The control signal 32, in turn, is dependent upon the signals 24B, 26B, 28B received via the signal busses 24, 26, 28 within the computer (not shown) and the design of the decoding logic 20.

It will be appreciated that many possible combinations or permutations of address signals 24B, data signals 26B, control signals 28B and decode logic 20 designs exist for generating a pulse gate control signal 32 or signal switch control signal 33. Selection of appropriate signals 24B, 26B, 28B and decode logic 20 design will depend upon each individual application. It will be further appreciated that the signals received from the computer, as well as the signals derived therefrom, can be single-bit or multiple-bit signals, as desired.

For example, in a preferred embodiment of the invention, the address signal 24B consists of an eight-bit wide address signal received from the address bus 24 which is decoded within the decoding logic 20 to determine whether the particular interface board on which the signal generator 10 is mounted has been addressed by the host computer (not shown). Additionally, the control signal 28B that is used consists of, among other signals as desired, a two-bit signal representing the status of input/output ("I/O") read and write flags within the host computer.

Thus, as controlled by the host computer, the gate control signal 32 gates the frame pulse signal 42 within the video frame pulse gate circuit 22 to produce a gated video frame pulse signal 34. This gated video frame pulse signal 34 can be used as an interrupt request signal for the host computer, e.g. as a stimulus for the host computer's software interrupt routines. This is useful in avoiding interrupting the host computer at inappropriate access times. Also as controlled by the host computer, the optional signal switch control signal 33 allows for programmable operation of the signal switch 16 to produce a gated video frame pulse signal 34, a free-running video frame pulse 44, or both, or neither.

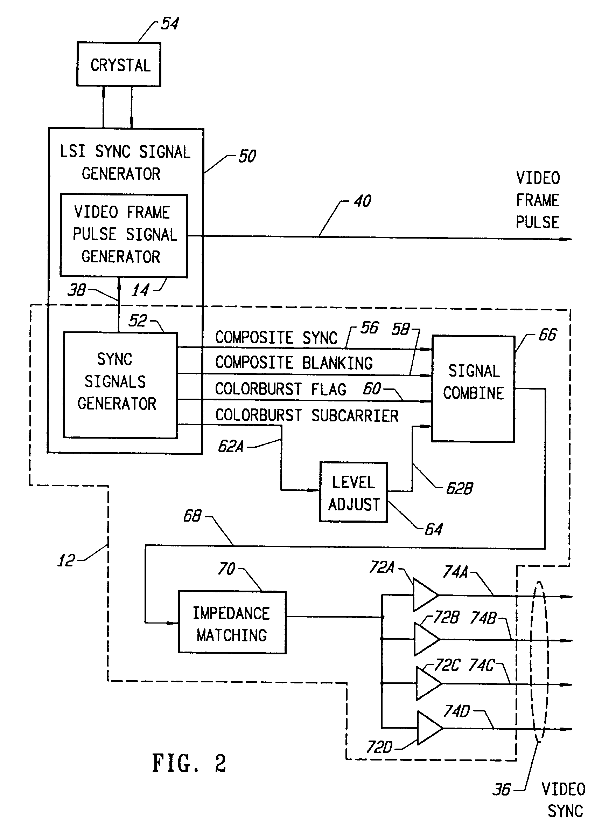

Referring to Figure 2, a preferred embodiment of the signal generator 10 uses a large scale integrated ("LSI") circuit 50 as a sync signal generator for generating the video sync signal 36 and video frame pulse signal 40. Integrated within the LSI sync signal generator 50 are circuits constituting the video frame pulse signal generator 14 and a sync signals generator 52. Using an external crystal 54 as a frequency reference, the LSI sync signal generator 50 generates a composite sync signal 56, a composite blanking signal 58, a colour burst flag signal 60 and a colour burst subcarrier signal 62A. The colour burst subcarrier signal 62A is passed through a level adjust circuit 64. The composite sync signal 56, composite blanking signal 58, colour burst flag signal 60 and level adjusted colour burst subcarrier signal 62B are combined together in a signal combiner 66 to produce a sync signal 68, i.e. a video black burst signal.

The sync signal 68 goes through an impedance matching circuit 70 before being divided substantially equally among four video buffer amplifiers 72A, 72B, 72C and 72D. Each of output signals 74A, 74B, 74C and 74D from the buffer amplifiers 72A to 72D is a video sync signal, i.e. a video black burst signal, and the signals 74A to 74D collectively make up the video sync signal 36 shown in Figure 1.

It will be appreciated that the signal combining circuit 66 can be based upon any of several types of design known in the art, depending upon the formats of its input signals 56, 58, 60 and 62B. For example, a multiple channel analog multiplexer can be used to the division multiplex the input signals 56, 58, 60 and 62B to generate the sync signal 68. Alternatively, an analog voltage or current summing circuit can be used, along with appropriately designed DC level shifters, to sum the input signals 56, 58, 60 and 62B to produce the sync signal (sync sum signal) 68.

The impedance matching circuit 70 is used to match the relatively high output impedance of the signal summing circuit 66 to the relatively low input impedance of the parallel combination of the four video amplifiers 72A to 72D. Such impedance matching circuits and their possible configurations are quite common and well known in the art. Similarly, the video amplifiers 72A to 72D are quite common and well known in the art.

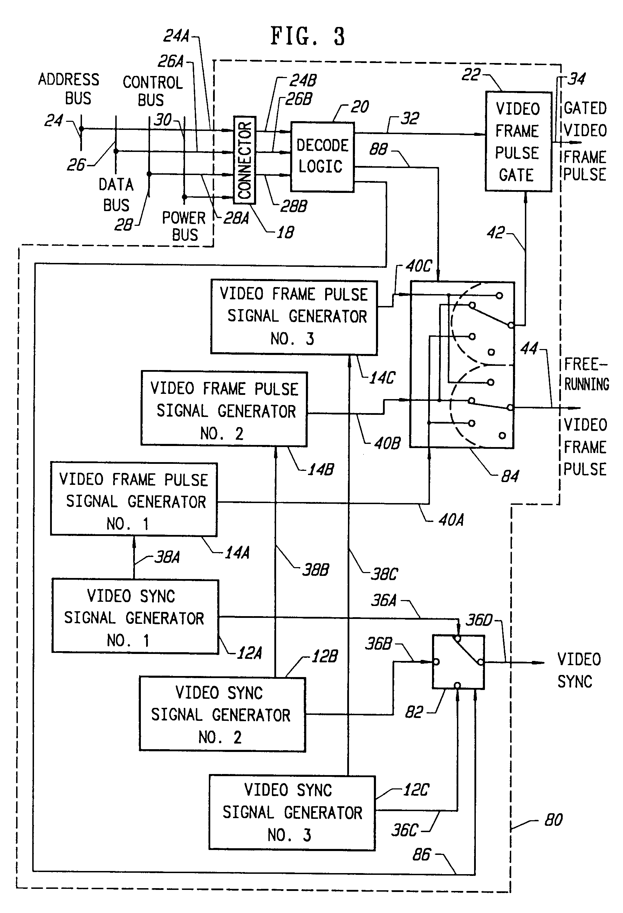

Referring to Figure 3, a video sync and frame pulse generator 80 in accordance with an alternative preferred embodiment of the invention has multiple video sync signal generators 12A, 12B and 12C and video frame pulse signal generators 14A, 14B and 14C. Similarly to the configuration of Figure 1 discussed above, the video frame pulse signal generators 14A, 14B and 14C receive respective frame pulse sync signals 38A, 38B and 38C for generating and synchronising video frame pulse signal outputs 40A, 40B and 40C thereof with corresponding video sync signal outputs 36A, 36B and 36C.

The generator 80 includes a video sync signal switch 82 and a video frame pulse signal switch 84 (the signal switch 84 replacing the signal switch 16 of Figure 1). The switches 82, 84 in accordance with control signals 86, 88 derived from the host computer (not shown) via the connector 18 and decoding logic 20, select from among the multiple video sync signals 36A to 36C and video frame pulse signals 40A to 40C to produce a video sync output signal 36D, a free-running video frame pulse signal 44, or a frame pulse signal 42 (also free-running at this point) for potential gating by the video frame pulse gate circuit 22.

The video sync signal switch 82 functionally comprises a signal-pole, triple-throw coupling or switch means, e.g. a solid state electronic or electromechanical switch. Its throws receive the video sync signals 36A to 36C and its pole provides the video sync signal 36D. The video frame pulse signal switch 84 functionally comprises two independently operable single-pole, triple-throw coupling or switch means, e.g. solid state electronic or electromechanical switches. their throws receive the video frame pulse signals 40A to 40C and their poles provide the free-running video frame pulse signal 44 and the frame pulse signal 42 (also free-running at this point) for potential gating by the video frame pulse gate circuit 22.

Similarly to the generation of the video frame pulse gate control signal 32, as discussed above, the video sync switch control signal 86 and video frame pulse switch control signal 88 are generated in accordance with the address signal 24B, data signal 26B, control signal 28B and decoding logic 20 design. Also as discussed above, any of these signals can be single-bit or multiple-bit signals, as desired. Further, it should be appreciated that some or all of the control signals 32, 86, 88 can be identical signals and share common signal paths, as desired.

Therefore, under control by the host computer, the desired video sync signal 36D and corresponding desired video frame pulse signals 42, 44 can be selected from among the video sync signals 36A to 36C and video frame pulse signals 40A to 40C, respectively. For example, each of the video sync signal generators 12A to 12C can operate in accordance with a different video standard, e.g. NTSC, PAL, SECAM, etc.

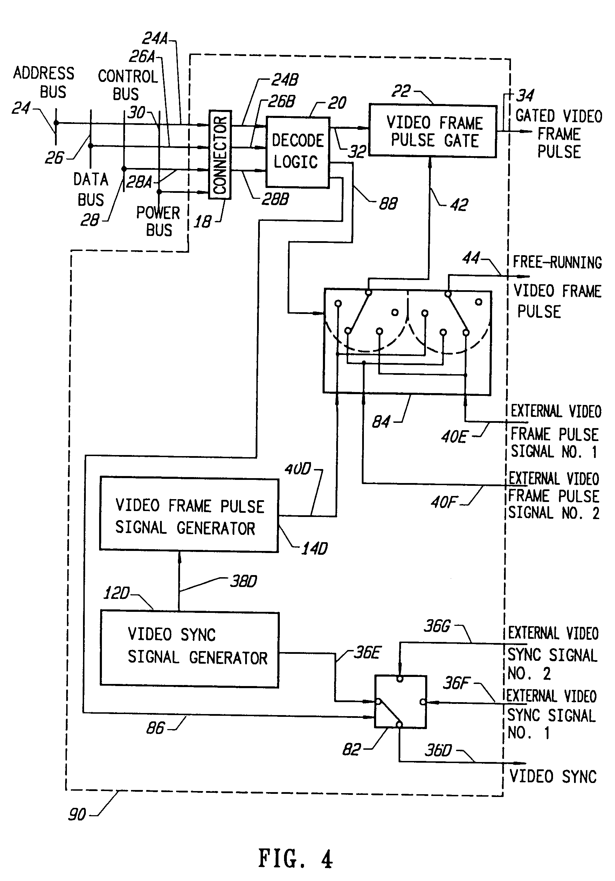

Referring to Figure 4, a video sync and frame pulse generator 90 in accordance with another alternative preferred embodiment of the invention has an internal video sync signal generator 12D providing an internal video sync signal 36E and an internal video frame pulse signal generator 14D providing an internal video frame pulse signal 40D, with means for receiving externally generated video sync signals 36F and 36G and externally generated video frame pulse signals 40E and 40F. In the generator 90, the video sync switch 82, in accordance with its control signal 86, selects a signal from among the internal video sync signal 36E and the external video sync signals 36F and 36G for outputting as the selected video sync signal 36D. Similarly, the video frame pulse switch 84, in accordance with its control signal 88, selects a signal from among the internal video frame pulse signal 40D and the external video frame pulse signals 40E and 40F for transferring as the selected video frame pulse signal 42 destined to become the gated video frame pulse signal 34, or for outputting as the free-running video frame pulse signal 44.

## Claims

1. A self-contained, computer controllable, video synchronisation and frame pulse signal generator (80; 90) comprising:
a video synchronisation circuit (12A; 12D) operative to generate a first video synchronisation signal (36A; 36E);
a first switch circuit (82) coupled to receive both said first video synchronisation signal (36A; 36E), and a second video synchronisation signal (36B; 36F, 36G), and operative to provide a switched video synchronisation signal;
a video frame pulse circuit (14A; 14D) coupled to the video synchronisation circuit (12A; 12D) and operative to generate a video frame pulse signal (40A; 40D) indicating the presence of a first video signal frame;
a second switch circuit (84) coupled to receive both said first video frame pulse signal (40A; 40D), and a second video frame pulse signal (40B; 40E, 40F) indicating the presence of a second video signal frame, and operative selectively to provide at least one switched video frame pulse signal (42, 44); and
a computer controllable gating circuit (22) operative selectively to gate one (42) of the switched video frame pulse signals.

2. A signal generator according to claim 1, wherein the video synchronisation circuit (12A; 12D) is operative to generate an NTSC video black burst signal.

3. A signal generator according to claim 1, wherein the video synchronisation circuit (12A; 12D) is operative to generate a PAL video black burst signal.

4. A signal generator according to claim 1, wherein the video synchronisation circuit (12A; 12D) is operative to generate a PAL-M video black burst signal.

5. A signal generator according to claim 1, wherein the video synchronisation circuit (12A; 12D) is operative to generate a SECAM video black burst signal.

6. A signal generator according to claim 1, wherein the video synchronisation circuit (12A; 12D) is operative to generate a high definition video synchronisation signal.

7. A signal generator (80) according to any one of claims 1 to 6, including a second video synchronisation circuit (12B) operative to generate said second video synchronisation signal (36B) and a second video frame pulse circuit (14B) coupled to the second video synchronisation circuit (12B) and operative to generate said second video frame pulse signal (40B).

8. A signal generator (80) according to claim 7, which comprises a circuit board, wherein the first-mentioned and second video synchronisation circuits (12A, 12B), the first-mentioned and second video frame pulse circuits (14A, 14B), the first and second switch circuits (82, 84), and the computer controllable gating circuit (22) are electrically coupled to the circuit board.

9. A pulse signal generator (90) according to any one of claims 1 to 6, wherein said first switch circuit (82) is coupled to receive an externally generated said second video synchronisation signal (36F, 36G) and said second switch circuit (84) is coupled to receive an externally generated said second video frame pulse signal (40E, 40F).

10. A signal generator (90) according to claim 9, which comprises a circuit board, wherein the video synchronisation circuit (12D), the video frame pulse circuit (14D), the first and second switch circuits (82, 84), and the computer controllable gating circuit (22) are electrically coupled to the circuit board.

11. A signal generator (80; 90) according to claim 8 or claim 10, which is capable of being used with an external personal computer having a signal bus, the signal generator comprising an electrical connector (18) which is mechanically and electrically connected to the circuit board for coupling to the signal bus within the personal computer.

12. A signal generator according to any one of the preceding claims, wherein the computer controllable gating circuit (22) is operative selectively to generate an interrupt request signal dependent upon the or one (42) of the switched video frame pulse signals.

## Patentansprüche

1. Einbau-Videosynchronisierungs- und Rahmenimpuls-Signalgenerator (80; 90), der rechnersteuerbar ist und folgendes aufweist:
eine Videosynchronisierungsschaltung (12A; 12D), die funktionsfähig ist, um ein Videosynchronisierungssignal (36A; 36E) zu erzeugen;
einen ersten Schalterkreis (82), der derart verbunden ist, um sowohl das erste Videosynchronisierungssignal (36A; 36E) als auch ein zweites Videosynchronisierungssignal (36B; 36F, 36G) zu empfangen, und funktionsfähig ist, um ein geschaltetes Videosynchronisierungssignal bereitzustellen;
eine Videorahmenimpulsschaltung (14A; 14D), die verbunden ist mit der Videosynchronisierungsschaltung (12A; 12D) und funktionsfähig ist, um ein Videorahmenimpulssignal (40A; 40D) zu erzeugen, das die Anwesenheit eines ersten Videosignalrahmens anzeigt;
einen zweiten Schalterkreis (84), der derart verbunden ist, um sowohl das erste Videorahmenimpulssignal (40A; 40D) als auch ein zweites Videorahmenimpulssignal (40B; 40E, 40F) zu empfangen, das die Anwesenheit eines zweiten Videosignalrahmens anzeigt, und selektiv funktionsfähig ist, um zumindest ein geschaltetes Videorahmenimpulssignal (42, 44) bereitszustellen; und
eine rechnersteuerbare Ausblendeschaltung (22), die selektiv funktionsfähig ist, um ein Signal (42) der geschalteten Videorahmenimpulssignale auszublenden.

2. Signalgenerator nach Anspruch 1, worin die Videosynchronisierungsschaltung (12A; 12D) funktionsfähig ist, um ein NTSC-Video-Schwarzpegelburstsignal zu erzeugen.

3. Signalgenerator nach Anspruch 1, worin die Videosynchronisierungsschaltung (12A; 12D) funktionsfähig ist, um ein PAL-Video-Schwarzpegelburstsignal zu erzeugen.

4. Signalgenerator nach Anspruch 1, worin die Videosynchronisierungsschaltung (12A; 12D) funktionsfähig ist, um ein PAL-M-Video-Schwarzpegelburstsignal zu erzeugen.

5. Signalgenerator nach Anspruch 1, worin die Videosynchronisierungsschaltung (12A; 12D) funktionsfähig ist, um ein SECAM-Video-Schwarzpegelburstsignal zu erzeugen.

6. Signalgenerator nach Anspruch 1, worin die Videosynchronisierungsschaltung (12A; 12D) funktionsfähig ist, um ein Hochauflösungs-Video-Synchronisierungssignal zu erzeugen.

7. Signalgenerator (80) nach einem der Ansprüche 1 - 6, der eine zweite Videosynchronisierungsschaltung (12B) beinhaltet, die funktionsfähig ist, um das zweite Videosynchronisierungssignal (36B) zu erzeugen, und eine zweite Videorahmenimpulsschaltung (14B) beinhaltet, die mit der zweiten Videosynchronisierungsschaltung (12B) verbunden ist und funktionsfähig ist, um das zweite Videorahmenimpulssignal (40B) zu erzeugen.

8. Signalgenerator (80) nach Anspruch 7, der eine Schaltkarte aufweist, worin die zuerst erwähnte und die zweite Videosynchronisierungsschaltung (12A, 12B), die zuerst erwähnte und die zweite Videorahmenimpulsschaltung (14A, 14B), der erste und zweite Schalterkreis (82, 84), und die rechnersteuerbare Ausblendeschaltung (22) elektrisch mit der Schaltkarte verbunden sind.

9. Impulssignalgenerator (90) nach einem der Ansprüche 1 - 6, worin der erste Schalterkreis (82) derart verbunden ist, um ein extern erzeugtes zweites Videosynchronisierungsssignal (36F, 36G) zu empfangen und der zweite Schalterkreis (84) derart verbunden ist, um ein extern erzeugtes zweites Videorahmenimpulssignal (40E, 40F) zu empfangen.

10. Signalgenerator (90) nach Anspruch 9, der eine Schaltkarte aufweist, worin die Videosynchronisierungsschaltung (12D), die Videorahmenimpulsschaltung (14D), der erste und der zweite Schalterkreis (82, 84), und die rechnersteuerbare Ausblendeschaltung (22) elektrisch mit der Schaltkarte verbunden sind.

11. Signalgenerator (80; 90) nach Anspruch 8 oder Anspruch 10, der derart ausgelegt ist, um mit einem externen Personalcomputer (Heimcomputer) mit einem Signalbus verwendet zu werden, wobei der Signalgenerator ein elektrisches Verbindungsglied (18) aufweist, das zur Verbindung mit dem Signalbus innerhalb des Personalcomputers mechanisch und elektrisch mit der Schaltkarte verbunden ist.

12. Signalgenerator nach einem der vorhergehenden Ansprüche, worin die rechnersteuerbare Ausblendeschaltung (22) selektiv funktionsfähig ist, um ein Unterbrechungsanforderungssignal zu erzeugen in Abhängigkeit von dem oder einem Signal (42) der geschalteten Videorahmenimpulssignale

## Revendications

1. Générateur de signaux de synchronisation vidéo pouvant être commandé par ordinateur, complet en lui-même et d'impulsion de trame (80, 90) comprenant :
un circuit de synchronisation vidéo (12A ; 12B) actif pour générer un premier signal de synchronisation vidéo (36A ; 36E) ;
un premier circuit de commutation (82) couplé pour recevoir à la fois ledit premier signal de synchronisation vidéo (36A ; 36E), et un second signal de synchronisation vidéo (36B ; 36F, 36G), et actif pour fournir un signal de synchronisation vidéo commuté ;
un circuit d'impulsion de trame vidéo (14A ; 14D) couplé au circuit de synchronisation vidéo (12A ; 12D) et actif pour générer un signal d'impulsion de trame vidéo (40A ; 40D) indiquant la présence d'une première trame de signal vidéo ;
un second circuit de commutateur (84) couplé pour recevoir à la fois ledit premier signal d'impulsion de trame vidéo (40A ; 40D), et un second signal d'impulsion de trame vidéo (40B ; 40E, 40F) indiquant la présence d'une seconde trame de signal vidéo, et actif sélectivement pour fournir au moins un signal d'impulsion de trame vidéo commuté (42, 44) ; et
un circuit de commande par porte pouvant être commandé par ordinateur (22) actif sélectivement pour commander par porte un (42) des signaux d'impulsion de trame vidéo commutés.

2. Générateur de signal selon la revendication 1, dans lequel le circuit de signal de synchronisation vidéo (12A ; 12D) est actif pour générer un signal vidéo de noir en salves NTSC.

3. Générateur de signal selon la revendication 1, dans lequel le circuit de synchronisation vidéo (12A ; 12D) est actif pour générer un signal vidéo de noir en salves PAL.

4. Générateur de signal selon la revendication 1, dans lequel le circuit de synchronisation vidéo (12A ; 12D) est actif pour générer un signal vidéo de noir en salves PAL-M.

5. Générateur de signal selon la revendication 1, dans lequel le circuit de synchronisation vidéo (12A ; 12D) est actif pour générer un signal vidéo de noir en salves SECAM.

6. Générateur de signal selon la revendication 1, dans lequel le circuit de synchronisation vidéo (12A ; 12D) est actif pour générer un signal synchronisation vidéo haute définition.

7. Générateur de signal (80) selon l'une quelconque des revendications 1 à 6, comprenant un second circuit de synchronisation vidéo (12B) actif pour générer ledit second signal de synchronisation vidéo (36B) et un second circuit d'impulsion de trame vidéo (14B) couplé au second circuit de synchronisation vidéo (12B) et actif pour générer ledit second signal d'impulsion de trame vidéo (40B).

8. Générateur de signal (80) selon la revendication 7, qui comprend une carte de circuit dans lequel les premier mentionné ci-dessus et second circuits de synchronisation vidéo (12A, 12B), les premier mentionné et second circuits d'impulsion de trame vidéo (14A, 14B), les premier et second circuits de commutation (82, 84) et le circuit de commande par porte pouvant être commandé par ordinateur (22) sont électriquement couplés à la carte de circuit.

9. Générateur de signal d'impulsion (90) selon l'une quelconque des revendications 1 à 6, dans lequel ledit premier circuit de commutation (82) est couplé pour recevoir un second signal de synchronisation vidéo généré de façon externe (36F, 36G) et ledit second circuit de commutation (84) est couplé pour recevoir un second signal d'impulsion de trame vidéo généré de façon externe (40E, 40F).

10. Générateur de signal (90) selon la revendication 9, qui comprend une carte de circuit, dans lequel le circuit de synchronisation vidéo (12D), le circuit d'impulsion de trame vidéo (14D), les premier et second circuits de commutation (82, 84), et le circuit de commande par porte pouvant être commandés par ordinateur (22) sont électriquement couplés à la carte de circuit.

11. Générateur de signal (80, 90) selon la revendication 8 ou la revendication 10, qui est capable d'être utilisé avec un ordinateur personnel externe ayant un bus de signal, le générateur de signal comprenant un connecteur électrique (18) qui est relié mécaniquement et électriquement à la carte de circuit pour coupler le bus de signal dans l'ordinateur personnel.

12. Générateur de signal selon l'une quelconque des revendications précédentes, dans lequel le circuit de commande par porte pouvant être commandé par ordinateur (22) est actif sélectivement pour générer un signal de demande d'interruption en fonction du ou d'un (42) des signaux impulsion de trame vidéo commutés.
